# EUROPÄISCHE PATENTANMELDUNG

(11) **EP 4 410 462 A1**
(43) Veröffentlichungstag der Anmeldung: **07.08.2024**
(21) Anmeldenummer: 23155018.7
(22) Anmeldetag: 06.02.2023
(51) Int. Cl.: B23C 3/04, B23B 31/40, B23P 13/02, F16C 33/04

(54) **VERFAHREN ZUR HERSTELLUNG EINES NICHT-ZYLINDRISCHEN ROTATIONSKÖRPERS, ROTATIONSKÖRPER, HALTEWERKZEUG, COMPUERTPROGRAMMPRODUKT UND DATENAGGLOMERAT**

(71) Anmelder: Flender GmbH, 46395 Bocholt (DE)
(72) Erfinder: DINTER, Ralf Martin, 46395 Bocholt (DE)
(74) Vertreter: Michalski Hüttermann & Partner Patentanwälte mbB

(57) **Zusammenfassung**

Es ist ein Verfahren zur Herstellung eines nicht-zylindrischen Rotationskörpers (26), insbesondere Gleitlager für ein Planetenrad eines Planetengetriebes, vorgesehen mit den Schritten Bereitstellen einer im Wesentlichen zylindrischen Hülse (10) in einem im Wesentlichen spannungsfreien Ausgangszustand, Einsetzen von mindestens zwei Spannbacken (16, 28) in einen Innenraum (18) der Hülse (10), Verspannen der Hülse (10) mit Hilfe der Spannbacken (16, 28) aus dem Ausgangszustand in einen von der Zylinderform abweichenden elastisch verformten Bearbeitungszustand, Erzeugen einer zylindrischen Außenseite (12) der verspannten Hülse (10), insbesondere durch ein spanendes Bearbeitungsverfahren, während eine Rotation der Hülse (10) relativ zu einem Werkzeug (22), insbesondere um eine durch einen Flächenschwerpunkt (20) einer Querschnittsfläche der Hülse (10) verlaufenden Rotationsachse (54), erfolgt, und Lösen der Spannbacken (16, 28) zur Rückverformung der Hülse (10) in einen im Wesentlichen spannungsfreien Endzustand zur Bereitstellung des Rotationskörpers (26). Durch die elastische Verformung der Hülse (10) mit Hilfe der Spannbacken (16, 28) während der Erzeugung der zylindrischen Außenseite (12) kann aus der Hülse (10) schnell, einfach und kostensparend bei einer hohen Zerspanungsleistung ein nicht-zylindrischer Rotationskörper (26) hergestellt werden.

## Beschreibung

Die Erfindung betrifft ein Verfahren, mit dessen Hilfe ein nicht-zylindrischer Rotationskörper, insbesondere ein Gleitlager für ein Planetenrad eines Planetengetriebes, kostengünstig hergestellt werden kann. Zudem betrifft die Erfindung ein durch das Verfahren herstellbaren Rotationskörper, ein Haltewerkzeug zur Durchführung des Verfahrens, ein Computerprogrammprodukt zur Durchführung des Verfahrens sowie ein Datenagglomerat zur additiven Fertigung und/oder Simulation des Rotationskörpers und/oder des Haltewerkzeugs.

Aus EP 3 670 967 B1 ist ein nicht-zylindrischer Planetenschaft eines Planetengetriebes bekannt, wobei der Planetenschaft aufgrund seines von der Kreisform abweichenden Querschnitts ein Gleitlager mit guten Schmierungseigenschaften ausbildet. Ein kostengünstiges Herstellungsverfahren ist jedoch nicht angegeben.

Es ist bekannt einen ovalen Exzenter mit Hilfe einer Drehmaschine durch Ovaldrehen herzustellen, indem ein zu bearbeitendes scheibenförmiges Werkstück exzentrisch zu einer Rotationsachse der Drehmaschine befestigt wird. Der Materialeinsatz und die Belastung des zu Anfang des Drehprozesses nur intervallmäßig beanspruchten Drehmeißels ist jedoch sehr hoch. Zudem ist die Maßgenauigkeit und Oberflächengüte eher gering und die Fertigungszeit sehr hoch.

Es besteht daher ein Bedürfnis nach einem kostengünstigen Herstellungsverfahren für einen nicht-zylindrischen Rotationskörper.

Es ist die Aufgabe der Erfindung, Maßnahmen aufzuzeigen, die eine kostengünstige Herstellung eines nicht-zylindrischen Rotationskörpers ermöglichen.

Die Lösung der Aufgabe erfolgt durch ein Verfahren mit den Merkmalen des Anspruchs 1, einen Rotationskörper mit den Merkmalen des Anspruchs 8, ein Haltewerkzeug mit den Merkmalen des Anspruch 9, ein Computerprogrammprodukt mit den Merkmalen des Anspruchs 14 und ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird.

Ein Aspekt der Erfindung betrifft ein Verfahren zur Herstellung eines nicht-zylindrischen Rotationskörpers, insbesondere Gleitlager für ein Planetenrad eines Planetengetriebes, mit den Schritten Bereitstellen einer im Wesentlichen zylindrischen Hülse in einem im Wesentlichen spannungsfreien Ausgangszustand, Einsetzen von mindestens zwei Spannbacken in einen Innenraum der Hülse, Verspannen der Hülse mit Hilfe der Spannbacken aus dem Ausgangszustand in einen von der Zylinderform abweichenden elastisch verformten Bearbeitungszustand, Erzeugen einer zylindrischen Außenseite der verspannten Hülse, insbesondere durch ein spanendes Bearbeitungsverfahren, während eine Rotation der Hülse relativ zu einem Werkzeug, insbesondere um eine durch einen Flächenschwerpunkt einer Querschnittsfläche der Hülse verlaufenden Rotationsachse, erfolgt, und Lösen der Spannbacken zur Rückverformung der Hülse in einen im Wesentlichen spannungsfreien Endzustand zur Bereitstellung des Rotationskörpers.

Bei der Erfindung wurde die Erkenntnis ausgenutzt, dass bei einem Rotationskörper, der nur geringfügig von der Zylinderform abweicht, die elastische Verformbarkeit bei der Erzeugung der nicht-zylindrischen Form ausgenutzt werden kann. Das Ausmaß der Unrundheit des Rotationskörpers liegt hierbei insbesondere innerhalb der Dehnung ε bei der doppelten Streckgrenze Rₑ des für den Rotationskörper gewählten Materials, so dass für eine maximale Radiusdifferenz ΔR zwischen einem minimalen Abstand Rᵢ der Außenseite des Rotationskörpers zu seinem Flächenmittelpunkt und einem maximalen Abstand Rₐ der Außenseite des Rotationskörpers zu seinem Flächenmittelpunkt, mit ΔR = Rₐ - Rᵢ, ΔR ≤ 2 ε(Rₑ), insbesondere ΔR ≤ 1,5 ε(Rₑ), vorzugsweise ΔR ≤ ε(Rₑ) und besonders bevorzugt ΔR ≤ 0,5 ε(Rₑ) gelten kann. Eine derartig geringe Abweichung des Rotationskörpers von einem Kreiszylinder ist für eine gute Schmierung eines Gleitlagers bereits ausreichend. Prinzipiell ist es möglich auch eine vernachlässigbare plastische Verformung der Hülse zuzulassen, beispielsweise indem die Hülse über die Streckgrenze Rₑ hinaus bis zur Dehngrenze R_{p0,2} belastet wird. Gegebenenfalls kann es in diesen Fall vorteilhaft sein zu prüfen, ob die Hülse nach der Bearbeitung gerichtet werden sollte und einen zusätzlichen Schritt für das Richten der Hülse nach dem Rückverformen vorzusehen. Besonders bevorzugt wird der durch das Verfahren erhaltene Rotationskörper als eine Gleitlagerschale eines Gleitlagers, insbesondere zur Lagerung eines Planetenrads eines Planentengetriebes, verwendet, wobei es sich bei dem Planetengetriebe insbesondere um einen Teil eines Antriebsstrangs einer Windkraftanlage zur Energieerzeugung für ein Stromnetz handelt.

Im Gegensatz zu einem Ovaldrehen ist es bei dem Verfahren möglich die Hülse mittelbar oder unmittelbar zentrisch in einer Werkzeugmaschine, insbesondere Drehmaschine oder Fräsmaschine, einzuspannen, so dass eine Drehachse der Hülse bei einer Relativdrehung der Hülse in Umfangsrichtung der Hülse relativ zum Werkzeug, insbesondere Drehmeißel oder Stirnfräser, durch ihren Flächenschwerpunkt verläuft. Dadurch ist es nicht erforderlich eine exzentrische Befestigung der Hülse auf einen genau definierten Abstand zu einer Rotationsachse der Werkzeugmaschine vorzunehmen. Außerdem kann ein Werkzeug, insbesondere ein spanabhebendes Werkzeug, bei der Erzeugung der zylindrischen Außenseite der Hülse im Bearbeitungszustand im Vergleich zum Ovaldrehen zu Beginn der Bearbeitung der Hülse über einen deutlich größeren Umfang der Hülse in Kontakt stehen, wodurch insbesondere eine Zerspanungsleistung deutlich erhöht werden kann und eine Belastung des Werkzeugs durch plötzliche Stöße reduziert werden kann. Der Verschleiß des Werkzeugs kann dadurch reduziert werden und die erreichbare Oberflächengüte deutlich verbessert werden. Es ist sogar möglich, dass die Spannbacken zunächst nur eine geringe elastische Verformung der Hülse vornehmen und alternierend und/oder gleichzeitig zu dem Erzeugen der zylindrischen Außenseite der Hülse im Bearbeitungszustand das Ausmaß der Verspannung im Bearbeitungszustand erhöhen, indem beispielsweise ein Anpressdruck der Spannbacken inkrementell, insbesondere sprungartig, und/oder kontinuierlich, insbesondere entlang eines vorgegebenen Belastungsprofil, erhöht wird. Dies ermöglicht es, dass das Werkzeug während einer Relativbewegung in axialer Richtung im Wesentlichen permanent im Eingriff mit dem Material der Hülse steht, wodurch sich eine besonders hohe Zerspanungsleistung ergeben kann. Insbesondere ergibt sich an der Außenseite der Hülse im Bearbeitungszustand sowie im spannungsfreien Endzustand genau eine, vorzugsweise von einer Axialseite zu anderen Axialseite der Hülse spiralförmig verlaufende, Bearbeitungsspur. Durch die elastische Verformung der Hülse mit Hilfe der Spannbacken während der Erzeugung der zylindrischen Außenseite kann aus der Hülse schnell, einfach und kostensparend bei einer hohen Zerspanungsleistung ein nicht-zylindrischer Rotationskörper hergestellt werden.

Der Flächenschwerpunkt einer Hülse mit einem im Wesentlichen kreisringförmigen Querschnitt fällt mit der Längsachse und Mittelachse der Hülse sowie dem Mittelpunkt der Hülse zusammen. Vorzugsweise bleibt der Flächenschwerpunkt der Hülse im Bearbeitungszustand unverändert erhalten. Bezüglich der Rotationsachse der Hülse wird jedoch im Zweifel auf den Flächenschwerpunkt der Querschnittsfläche der Hülse abgestellt, der sich im Ausgangszustand einstellen würde.

Die Hülse weist insbesondere einen kreisringförmigen Querschnitt auf. Vorzugsweise weist die Hülse eine Erstreckung in axialer Richtung auf, die größer als der Außenradius der Hülse im spannungsfreien Ausgangszustand ist. Die Materialdicke der Hülse im Ausgangszustand ist insbesondere so groß gewählt, dass bei der Erzeugung der zylindrischen Außenseite der Hülse im verspannten Bearbeitungszustand eine spanende Bearbeitung über die gesamte axiale Länge und den gesamten Umfang der Hülse durchführbar ist. Die Hülse kann aus einem metallischen Material, insbesondere Stahl, hergestellt sein. Vorzugsweise ist die Hülse aus einem Gleitlagerwerkstoff hergestellt, so dass der nach dem Verfahren hergestellte Rotationskörper für ein Gleitlager, insbesondere als Innenring, verwendet werden kann.

Der Gleitlagerwerkstoff kann bevorzugt ausgewählt sein aus einer Gruppe umfassend Aluminiumbasislegierungen, Bismutbasislegierungen, Silberbasislegierungen, Kupferbasislegierungen. Es sind aber auch andere Legierungen verwendbar, beispielsweise Legierungen auf Indiumbasis. Bevorzugt werden bleifreie Legierungen eingesetzt. Bleifreie Legierungen sind dabei Legierungen, die Blei in einem maximalen Anteil enthalten, der dem Anteil an üblichen Verunreinigungen in derartigen Legierungen entspricht. Der Gleitlagerwerkstoff kann beispielsweise auch eine Zinnbasislegierung, eine AlSn-Basislegierung, eine Legierung auf AlZn-, AlSi-, AlSnSi-, CuAl-, CuSn-, CuZn-, CuSnZn-, CuZnSn-, CuBi- sowie AlBi-Basis, eine Reinmetallschicht aus Al, Ni, Co, Sn, etc., aufweisen oder daraus bestehen.

Es ist zudem möglich, dass der Gleitlagerwerkstoff Hartpartikel und/oder Weichphasenpartikel aufweist. Die Hartpartikel können ausgewählt sein aus einer Gruppe umfassend Metalloxide, wie beispielsweise MgO, TiO₂, ZrO₂, Al₂O₃, Metallnitride, Metallcarbide, wie beispielsweise SiC, WC, B₄C Metallboride, Metallsilizide. Die Weichphasenpartikel können ausgewählt sein aus einer Gruppe umfassend Graphit, hexagonales BN, Metallsulfide. Die Hartpartikel weisen eine größere Härte auf, als eine Matrix in dem Gleitlagerwerkstoff, in der die Hartpartikel eingebettet sind. Die Weichphasenpartikel weisen hingegen eine kleinere Härte auf, als die Matrix in dem Gleitlagerwerkstoff, in der sie eingebettet sind. Der Anteil der Hartpartikel und/oder Weichphasenpartikel in dem Gleitlagerwerkstoff kann ausgewählt sein aus einem Bereich von 3 Gew.% bis 25 Gew.%, insbesondere von 5 Gew.% bis 20 Gew.%. Insbesondere kann die mittlere Partikelgröße der Weichphasenpartikel und/oder Hartphasenpartikel zwischen 1 µm bis 100 µm, vorzugsweise 5 µm bis 20 µm, betragen.

Eine Einlaufschicht kann auf der Außenseite der Hülse im Endzustand ganz oder teilweise vorgesehen werden. Die Einlaufschicht kann beispielsweise eine Reinmetallschicht sein, z.B. Zinn. Bevorzugt ist die Einlaufschicht allerdings eine polymerbasierte Einlaufschicht. Als Polymer wird insbesondere ein Polyimid oder eine Polyamidimid eingesetzt. Weiter kann die Einlaufschicht auch einen Anteil an Festschmierstoffen enthalten, beispielsweise MoS₂ und/oder Grafit. Der Anteil an dem Polymer an der Einlaufschicht kann zwischen 40 Gew.-% und 80 Gew.-% betragen. Den Rest auf 100 Gew.-% können die Festschmierstoffe bilden.

Die Spannbacken können insbesondere eine größere Härte als das Material der Hülse aufweisen. Beispielsweise sind die Spannbacken aus einem gehärteten oder vergüteten, insbesondere legiertem, Stahl hergestellt. Die Spannbacken weisen insbesondere eine Erstreckung in Umfangsrichtung der Hülse auf, die groß genug ist, dass die Spannbacke sich nicht in das Material der Hülse einprägt und die Hülse plastisch verformt. Vorzugsweise ist die Erstreckung der Spannbacken in Umfangsrichtung der Hülse klein genug, um die Hülse im verspannten Bearbeitungszustand elastisch in einen ovale Form mit oder ohne Symmetrieachse zu zwingen. Vorzugsweise können die Spannbacken die Hülse zumindest über einen sich in axialer Richtung erstreckenden Teilbereich in eine elliptische oder ovale Außenkontur elastisch verformen. Besonders bevorzugt ist eine Kraftrichtung der jeweiligen Spannbacke im Wesentlichen ausschließlich in radialer Richtung der Hülse im Ausgangszustand gerichtet. Die jeweilige Spannbacke kann eine nach radial außen weisende Anpressfläche aufweisen, die insbesondere in Umfangsrichtung der Hülse gerundet, und/oder angeschrägt ausgeführt ist und/oder aus verschiedenen über eine Kante oder einen Radius miteinander verbundene Teilflächen zusammengesetzt ist. Vorzugsweise kann die Anpressfläche der Spannbacke korrespondierend zu einer nach radial innen weisenden Innenseite der Hülse im Ausgangszustand und/oder im Bearbeitungszustand ausgeformt sein. Insbesondere ist die Anpressfläche an ihren in Umfangsrichtung weisenden Endteilstücken zur Innenseite der Hülse zurückgenommen ausgeführt, damit ein Eindrücken von Kanten der Spannbacke in das Material der Hülse vermieden ist. Die jeweilige Spannbacke kann in axialer Richtung der Hülse im Wesentlichen eben und/oder zumindest in axialen Endbereichen angeschrägt ausgeführt sein. Durch einen angeschrägten Verlauf der Spannbacke in axialer Richtung kann die Spannbacke in unterschiedlichen Axialbereichen unterschiedliche Erstreckung nach radial außen aufweisen, so dass die Hülse konisch aufgeweitet werden kann. Insbesondere ist die Spannbacke an ihren axialen Stirnseiten zurückgenommen ausgeführt, damit ein Eindrücken von Kanten der Spannbacke in das Material der Hülse vermieden ist. Die axiale Erstreckung der jeweiligen Spannbacke kann an den von dieser Spannbacke elastisch zu verformenden Teilbereich angepasst sein. Eine Materialstärke der Spannbacke in radialer Richtung ist insbesondere so groß gewählt, dass die Spannbacke im Vergleich zur Hülse als starrer Körper wirkt und im Vergleich zur Hülse unter Last im Wesentlichen nicht elastisch verformt wird. Über die dreidimensionale Formgestaltung der jeweiligen Spannbacke kann die elastische Verformung der Hülse im Bearbeitungszustand vorgegeben werden. Dies ermöglicht es insbesondere für den Verlauf der Außenseite der Hülse im rückverformten Endzustand einen Verlauf der Außenseite in axialer Richtung vorzusehen, der zumindest abschnittsweise linear und/oder polynomisch und/oder logarithmisch und/oder mit gerundeten Erhebungen und/oder Senken ausgestaltet ist, wobei vorzugsweise verschiedene Formverläufe in verschiedenen Axialbereichen der Hülse vorgesehen sind.

Im Ausgangszustand liegt die Hülse im Wesentlichen als Ringzylinder vor. Im verspannten Bearbeitungszustand ist die Hülse von den Spannbacken in eine von der Zylinderform abweichende Form, insbesondere eine ovale und/oder elliptische Form, elastisch verformt. Im verspannten Bearbeitungszustand wird die Hülse in eine Form mit einer zylindrischen Außenseite überführt, so dass nach der Rückverformung der Hülse in den entspannten Endzustand die Hülse eine nicht-zylindrische Form aufweist. Die Hülse im Endzustand kann den herzustellenden nicht-zylindrischen Rotationskörper ausbilden. Gegebenenfalls können noch weitere Bearbeitungsschritte an der Hülse im Endzustand vorgenommen werden, um den gewünschten nicht-zylindrischen Rotationskörper zu erhalten, beispielsweise eine Wärmebehandlung, eine Beschichtung und/oder eine Verbindung mit einem weiteren Bauteil.

Insbesondere wird ein axialer Endbereich der Hülse im Bearbeitungszustand zu einer axialen Stirnfläche hin im Wesentlichen konisch aufgeweitet. Hierzu kann eine im Endbereich angreifende Spannbacke in axialer Richtung der Hülse angeschrägt verlaufen. Durch die konische Aufweitung der Hülse im Endbereich kann bei der Erzeugung der zylindrischen Außenseite der verspannten Hülse zur Stirnseite der Hülse hin mehr Material abgetragen werden als zu einem Mittenbereich der Hülse hin. Im entspannten Endzustand der Hülse kann der durchschnittliche Durchmesser der Hülse im Endbereich zur Stirnseite hin abnehmen. Wenn der auf der Hülse im entspannten Endzustand basierende nicht-zylindrische Rotationskörper als Gleitlager verwendet wird, das eine größere axiale Erstreckung als die auf dem Rotationskörper abgleitende Gegengleitlagerfläche kann eine ansonsten entstehende Spannungsspitze infolge einer Kantenpressung an dem Übergang der axial verlaufenden Gegengleitlagerfläche zu einer radial verlaufenden Stirnseite kompensiert werden. Die Belastung der Komponenten des Gleitlagers, das den mit Hilfe des Verfahrens hergestellten Rotationskörper aufweist, kann dadurch vergleichmäßigt und gering gehalten werden. Bei einem geringen Bauraumbedarf können vergleichsweise hohe Lasten in einem derartigen Gleitlager abgetragen werden, so dass ein derartiges Gleitlager insbesondere für eine Lagerung eines relativ drehbaren Planetenrads an einer feststehenden Planetenachse gut geeignet ist.

Vorzugsweise werden sowohl ein Mittenbereich der Hülse als auch der/ein Endbereich der Hülse im Bearbeitungszustand von den Spannbacken elastisch verformt, wobei die Verformung des Mittenbereichs von der Verformung des Endbereich abweicht, wobei insbesondere der Mittenbereich im Wesentlichen oval und der Endbereich zumindest im Wesentlichen konisch verformt wird. Durch die unterschiedliche elastische Verformung der Hülse in dem Mittenbereich und in dem mindestens einen Endbereich kann im entspannten Endzustand der Hülse in dem Mittenbereich eine Schmiertasche, insbesondere zur Aufnahme von Schmieröl, ausgebildet werden, die in axialer Richtung von dem jeweiligen Endbereich begrenzt ist, so dass allenfalls nur ein geringer Anteil an Schmieröl aus der Schmiertasche über den Endbereich austreten kann.

Besonders bevorzugt werden erste Spannbacken zum Verspannen des Mittenbereichs während des Verspannens des Endbereichs mit Hilfe von zweiten Spannbacken nach radial außen getrieben. Die zum Verspannen des Mittenbereichs vorgesehenen ersten Spannbacken können zu den Stirnseiten der Hülse axial beabstandet sein. Vorzugsweise sind die ersten Spannbacken zu einem Großteil oder sogar vollständig ausschließlich in dem Mittenbereich positioniert. Die zweiten Spannbacken können an der von dem Mittenbereich weg weisenden Stirnseite, welche den jeweiligen Endbereich axial begrenzt, vorgesehen sein und insbesondere über die Ebene der Stirnseite hinaus aus der Hülse heraus abstehen. Dies ermöglicht es die zweiten Spannbacken zum elastischen Verformen des jeweiligen Endbereichs von außerhalb der Hülse zu manipulieren, insbesondere axial in die Hülse hereinzupressen und/oder nach radial außen zu pressen. Diese Bewegung der zweiten Spannbacke kann genutzt werden, um über eine direkte oder indirekte kinematische Koppelung die ersten Spannbacken in radialer Richtung nach außen zu treiben und dadurch den Mittenbereich elastisch zu verformen und zu verspannen. Obwohl die ersten Spannbacken kaum oder gar nicht von außerhalb der Hülse unmittelbar zugänglich sind, können die ersten Spannbacken zumindest mittelbar über die kinematische Koppelung mit der mindestens einen zweiten Spannbacke zum Verspannen des Mittenbereichs der Hülse kontrolliert und über einen definierten Weg nach radial außen getrieben werden. Die kinematische Koppelung der zweiten Spannbacken mit den ersten Spannbacken kann beispielsweise über relativ zueinander verschiebbare schiefe Ebenen erfolgen. Vorzugsweise sind die ersten Spannbacken unmittelbar oder mittelbar an den zweiten Spannbacken, beispielsweise über schiefe Ebenen und/oder konusförmige Flächen, zentriert.

Grundsätzlich ist es möglich, dass mehrere in einem gemeinsamen Axialbereich der Hülse vorgesehene Spannbacken in Umfangsrichtung gleichmäßig verteilt sind, so dass sich im verspannten Bearbeitungszustand der Hülse in diesem Axialbereich eine elliptische Außenkontur ergeben kann. Insbesondere sind mehrere in einem gemeinsamen Axialbereich der Hülse vorgesehene Spannbacken in Umfangsrichtung ungleichmäßig verteilt. Dadurch kann sich eine ungleichmäßige Verformung der Hülse mit einer von einer Ellipse abweichenden Außenkontur ergeben, beispielsweise eine eiförmige Kontur oder ovale Kontur mit oder ohne Symmetrieachse. Dadurch kann die nicht-zylindrische Außenkontur der Hülse im Endzustand an unterschiedliche Anforderungsprofile angepasst werden, beispielsweise für eine ungleichmäßige Verteilung von Schmiertaschen über den Umfang der Hülse im Endzustand.

Vorzugsweise wird mindestens eine Spannbacke beim Verspannen der Hülse selbsthemmend mit der Hülse verpresst, wobei diese Spannbacke einen axial von der Hülse abstehenden Axialanschlag aufweist und beim Lösen dieser Spannbacke eine Axialkraft zum Überwinden der Selbsthemmung auf den Axialanschlag aufgeprägt wird. Die entsprechende Spannbacke kann beispielsweise über eine schiefe Ebene mit Hilfe einer Axialkraft nach radial außen getrieben werden und/oder selber eine schiefe Ebene aufweisen, so dass sich die Spannbacke im verspannten Zustand mit der Hülse selbsthemmend verkeilen kann. Durch den abstehenden Axialanschlag kann jedoch eine Axialkraft auf den Axialanschlag ausgeübt werden, mit dessen Hilfe die Selbsthemmung überwunden und die Spannbacke von der Hülse wieder gelöst werden kann. Durch die Selbsthemmung kann die jeweilige Spannbacke fest mit der Hülse verpresst sein, so dass auch bei einer Bewegung der Hülse, insbesondere eine Rotation der Hülse, die Spannbacke sich nicht lösen kann. Mit Hilfe des abstehenden Axialanschlags kann die Spannbacke nach dem Erzeugen der zylindrischen Außenseite der Hülse leicht wieder gelöst und entfernt werden. Die Spannbacke kann beispielsweise zwischen dem Axialanschlag und der übrigen Spannbacke eine nach radial außen oder nach radial innen geöffnete Vertiefung aufweisen, so dass der Axialanschlag von radial außen beziehungsweise von radial innen umgriffen werden kann, um die Spannbacke aus der Hülse herauszuziehen. Zusätzlich oder alternativ kann sich der Axialanschlag nur teilweise in Umfangsrichtung erstrecken und eine in tangentiale Richtung weisende Vertiefung aufweisen, so dass der Axialanschlag von einer tangentialen Richtung und/oder von einer Umfangsrichtung her, beispielsweise von einer Nutmutter, umgriffen werden kann, um die Spannbacke aus der Hülse herauszuziehen.

Besonders bevorzugt erfolgt das Erzeugen der zylindrischen Außenseite der Hülse durch ein spanabhebendes Verfahren, insbesondere Drehen, Fräsen oder Schleifen, wobei die nach der spanabhebenden Bearbeitung im Bearbeitungszustand und/oder im Endzustand der Hülse vorliegende Außenseite durch einen einzigen Werkzeugkontakt eines spanabhebenden Werkzeugs mit der Hülse über die gesamte axiale Erstreckung der Hülse erzeugt ist. Die in den nicht-zylindrischen Bearbeitungszustand elastisch verformte Hülse kann durch ein spanendes Standardbearbeitungsverfahren an der Außenseite zylindrisch ausgeführt werden, wobei sich der beabsichtigte nicht-zylindrische Endzustand erst durch die elastische Rückverformung ergibt. Dadurch ist es nicht erforderlich in verschiedenen axialen Teilbereich unterschiedliche spanende Bearbeitungsschritte vorzusehen. Stattdessen ist es möglich zumindest im finalen Bearbeitungsschritt die gesamte Außenseite der Hülse von einem axialen Ende bis zum anderen axialen Ende über den gesamten Umfang spanend zu bearbeiten. Dadurch ergibt sich eine gute und einheitliche Oberfläche, die nur eine einzige Bearbeitungsspur aufweist. Gegebenenfalls kann die so erzeugte Oberfläche im Bearbeitungszustand oder im Endzustand der Hülse weiter veredelt, beispielsweise geschliffen, geläppt oder gehont werden.

Insbesondere wird die Hülse im Endzustand auf einen, insbesondere zweiteiligen, Kern aufgesteckt, insbesondere aufgepresst, wobei eine Außenkontur des Kerns ganz oder teilweise einer Innenkontur der Hülse entspricht. Vorzugsweise ist die Innenkontur der Hülse im Wesentlichen zylindrisch. Durch den Kern kann die Hülse in radialer Richtung verstärkt und versteift werden. Ein elastisches Nachgeben der Hülse nach radial innen unter Last kann durch den Kern blockiert werden. Vorzugsweise weist der Kern eine größere Härte als die Hülse auf, so dass beispielsweise das Material der Hülse aus einem eher weichen und/oder duktilen Gleitlagerwerkstoff und das Material des Kerns aus einem eher harten und starren Stahl, insbesondere einen gehärteten oder vergüteten Stahl, hergestellt sein kann. Beispielsweise ist der Kern zweiteilig, so dass ein erster Teil des Kern an der einen Axialseite der Hülse und ein zweiter Teil des Kerns an einer anderen Axialseite der Hülse, insbesondere über eine Einführungsschräge und ansonsten mit Presspassung, eingesteckt werden kann Die beiden Teile des Kerns können, beispielsweise mit Hilfe einer Schraubenverbindung, aufeinander zu gezogen werden, vorzugsweise bis die beiden Teile des Kerns sich innerhalb der Hülse treffen. Der Kern kann insbesondere in axialer Richtung aus der Hülse herausragen, beispielsweise um den Kern als feststehende Planetenradachse an einem Axialende oder an beiden Axialende mit einem Planetenradträger eines Planetengetriebes zu befestigen.

Ein weiterer Aspekt der Erfindung betrifft einen Rotationskörper herstellbar nach dem Verfahren, das wie vorstehend beschrieben aus- und weitergebildet sein kann, mit einer nicht-zylindrischen Außenseite in einem Mittenbereich und konisch verlaufenden Endbereichen, wobei die Außenseite nur eine einzige spanabhebende Bearbeitungsspur aufweist. Obwohl der auf der Hülse im Endzustand basierende Rotationskörper eine nicht-zylindrische Außenseite aufweist, können die Oberflächengüte beeinträchtigende Übergänge zwischen den unterschiedlich ausgeformten axialen Teilbereichen, die beispielsweise durch einen Werkzeugwechsel oder ein Wechsel des Bearbeitungsverfahren verursacht sein können, vermieden werden. Der nach dem vorstehenden Verfahren herstellbare Rotationskörper kann dadurch eine hohe Oberflächengüte, die bei einer sequenziellen Bearbeitung mit verschiedenen Werkzeugen und/oder verschiedenen Verfahren nicht ohne erreichbar wäre.

Durch die elastische Verformung der Hülse mit Hilfe der Spannbacken während der Erzeugung der zylindrischen Außenseite kann aus der Hülse schnell, einfach und kostensparend bei einer hohen Zerspanungsleistung ein nicht-zylindrischer Rotationskörper hergestellt werden.

Ein Aspekt der Erfindung kann eine Verwendung des Rotationskörpers, der wie vorstehend beschrieben aus- und weitergebildet sein kann, als Innenring eines Gleitlagers, vorzugsweise zur Lagerung eines Planetenrads auf einer feststehenden Planetenachse eines Planetenträgers eines Planetengetriebes, vorzugsweise für eine Windkraftanlage, betreffen.

Ein weiterer Aspekt der Erfindung kann einen Planetenträger betreffen, bei dem als ein Kern des Rotationskörpers, der wie vorstehend beschrieben aus- und weitergebildet sein kann, eine feststehend mit mindestens einer Planetenträgerwange des Planetenträgers befestigte Planetenachse vorgesehen ist, auf welcher der Rotationskörper zur Ausbildung eines Innenrings eines Gleitlagers mit einem auf der Planetenachse und dem Rotationskörper aufgesteckten Planetenrad aufgepresst ist.

Ein weiterer Aspekt der Erfindung kann ein Windkraftgetriebe für eine Windkraftanlage betreffen, bei der mindestens ein Planetengetriebe zur Drehzahlwandlung zwischen einem Rotor der Windkraftanlage und einem Generator der Windkraftanlage vorgesehen ist, wobei das Planetengetriebe einen Planetenträger aufweist, der wie vorstehend beschrieben aus- und weitergebildet ist.

Ein Aspekt der Erfindung betrifft ferner ein Haltewerkzeug zur Durchführung des Verfahrens, das wie vorstehend beschrieben aus- und weitergebildet sein kann, mit ersten Spannbacken zum elastischen Verformen eines Mittenbereichs der Hülse, zweiten Spannbacken jeweils zum elastischen Verformen von sich an dem Mittenbereich anschließenden Endbereichen der Hülse, zwei an unterschiedlichen Axialseiten der ersten Spannbacken über eine Schräge zum Auseinanderdrücken der ersten Spannbacken in radialer Richtung angreifenden Haltekörpern, wobei die Haltekörper in axialer Richtung zueinander verlagerbar sind, wobei mit dem jeweiligen Haltekörper die jeweils zugeordnete zweite Spannbacke bewegungsgekoppelt ist. Obwohl die ersten Spannbacken von außerhalb der Hülse kaum zugänglich sind, kann das Hereindrücken der zweiten Spannbacken in axialer Richtung in die Hülse hinein den Haltekörper in axialer Richtung bewegen. Dadurch können die Haltekörper über die Schräge, die beispielsweise Teil einer schiefen Ebene und/oder eines Konus ist, an den ersten Spannbacken angreifen und die ersten Spannbacken nach radial außen treiben. Die Bewegungskoppelung der zweiten Spannbacken mit dem jeweils zugeordneten Haltekörper kann beispielsweise durch einen, insbesondere lösbaren, Mitnehmer des Haltekörpers erfolgen, welcher die zweite Spannbacke in axialer Richtung mitnimmt, wenn die Haltekörper in axialer Richtung aufeinander zu verlagert werden. Der Mitnehmer kann insbesondere durch eine auf dem Haltekörper aufgeschraubte Nutmutter ausgebildet sein. Durch die elastische Verformung der Hülse mit Hilfe der Spannbacken, das heißt erste Spannbacken und/oder zweite Spannbacken, während der Erzeugung der zylindrischen Außenseite kann aus der Hülse schnell, einfach und kostensparend bei einer hohen Zerspanungsleistung ein nicht-zylindrischer Rotationskörper hergestellt werden.

Vorzugsweise ist mit dem Haltekörper ein relativ zu dem Haltekörper mit einem Bewegungsanteil in axialer Richtung bewegbarer Endanschlag zum Anpressen an die zugeordnete zweite Spannbacke befestigt, wobei insbesondere der Endanschlag durch eine auf den Haltekörper aufgeschraubte Nutmutter ausgebildet ist. Besonders bevorzugt ist der Endanschlag Teil eines Mitnehmers zum Anschlagen an einen aus der Hülse herausragenden Axialanschlag der zweiten Spannbacke. Insbesondere kann der Mitnehmer die zweite Spannbacke gemeinsam mit dem zugeordneten Haltekörper durch eine axialer Relativbewegung zur Hülse von der Hülse lösen. Der Endanschlag kann insbesondere durch eine auf die Hülse zu weisende Axialseite eines Mitnehmers ausgebildet sein. Vorzugsweise ist ein Rückanschlag zum Herausziehen der zweiten Spannbacke durch eine von der Hülse weg weisende Axialseite des Mitnehmers ausgebildet. Der Mitnehmer kann von der Nutmutter ausgebildet sein, die in einem zur Hülse weisenden Teilbereich einen Teil der zweiten Spannbacke, insbesondere ein Axialanschlag der zweiten Spannbacke, umgreifen kann, um eine Axialkraft, insbesondere in beide Axialrichtungen, auf die zweite Spannbacke ausüben kann. Die zweite Spannbacke kann in die auf den zugehörigen Haltekörper aufgeschraubte Nutmutter eingehakt sein, so dass die zweite Spannbacke und mittelbar über die Bewegungskoppelung der zweiten Spannbacke mit der ersten Spannbacke über den Haltekörper auch die erste Spannbacke von außerhalb der Hülse mit Hilfe der Nutmutter betrieben werden kann, insbesondere verspannt und gelöst werden.

Insbesondere sind die beiden Haltekörper relativ zueinander axial verlagerbar miteinander verschraubt. Dadurch können die einzelnen Bauteile des Haltewerkzeugs im von der Hülse gelösten Zustand und/oder im mit der Hülse verspannten Zustand zusammengehalten werden und können nicht auseinander fallen. Dies erleichtert es eine bereits bearbeitete Hülse durch eine neue zu bearbeitende Hülse zu ersetzen, wodurch der Produktionstakt zur Herstellung der nicht-zylindrischen Rotationskörper erhöht werden kann. Zudem kann durch das Anziehen der Schraubenverbindung zwischen den beiden Haltekörpern das Verspannen der Hülse über die ersten Spannbacken und gleichzeitig über die zweiten Spannbacken schnell und einfach erfolgen.

Vorzugsweise weist der mindestens eine Haltekörper einen von der Hülse wegweisenden Montagebereich zur Befestigung des Haltekörpers in einer Werkzeugmaschine, insbesondere Drehmaschine und/oder Fräsmaschine und/oder Schleifmaschine, auf. Insbesondere weist jeder der zwei Haltekörper den Montagebereich auf, so dass das Haltewerkzeug beidseitig in eine Werkzeugmaschine eingespannt werden kann. Durch die beidseitige Befestigung des Haltewerkzeug in der Werkzeugmaschine kann ein elastisches Ausweichen des Haltewerkzeugs und der Hülse unter einer angreifenden Kraft bei einer spanenden Bearbeitung vermieden werden. Zudem kann eine elastische Verformung unter Fliehkrafteinfluss bei einer schnellen Rotation des Haltewerkzeug vermieden werden, wodurch eine gute Oberflächengüte mit einer geringen Rauigkeit ermöglicht ist.

Ein weiterer Aspekt betrifft ein Computerprogrammprodukt umfassend Befehle, die bei der Ausführung des Programms durch eine Datenverarbeitungseinrichtung einer Werkzeugmaschine diese veranlassen, das Verfahren, das wie vorstehend beschrieben aus- und weitergebildet sein kann, auszuführen. Dadurch ist es möglich, dass eine Werkzeugmaschine gegebenenfalls eine zu bearbeitende Hülse auf ein die Spannbacken aufweisendes Haltewerkzeug, das insbesondere wie vorstehend beschrieben aus- und weitergebildet sein kann, aufsteckt und/oder eine auf das Haltewerkzeug aufgesteckte Hülse detektiert. Nachfolgend kann die Werkzeugmaschine die Hülse mit Hilfe der Spannbacken automatisch in den Bearbeitungszustand verspannen und die Außenseite der Hülse bearbeiten. Nach der Bearbeitung der Außenseite der Hülse kann die Werkzeugmaschine die Bearbeitung beenden und die Spannbacken lösen, so dass sich die Hülse in den Endzustand zurückverformen kann. Gegebenenfalls kann die bearbeitet Hülse von der Werkzeugmaschine automatisch von dem Haltewerkzeug abgezogen werden, wodurch der ursprüngliche Ausgangszustand der Werkzeugmaschine für die Bearbeitung einer neuen Hülse wiederhergestellt ist und das Verfahren automatisiert wiederholt werden kann. Durch die elastische Verformung der Hülse mit Hilfe der Spannbacken während der Erzeugung der zylindrischen Außenseite kann aus der Hülse schnell, einfach und kostensparend bei einer hohen Zerspanungsleistung ein nicht-zylindrischer Rotationskörper hergestellt werden.

Ein Aspekt betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Rotationskörper, der wie vorstehend beschrieben aus- und weitergebildet sein kann, oder dem Haltewerkzeug, das wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Rotationskörpers und/oder des Haltewerkzeugs, insbesondere durch 3D-Druck, durchzuführen und/oder bei einer Verarbeitung durch eine Datenverarbeitungseinrichtung zur Durchführung einer technischen Simulation eine Simulation der Funktionsweise des Rotationskörpers und/oder des Haltewerkzeugs durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildender Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise des Rotationskörpers und/oder des Haltewerkzeugs zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Wenn ein dem konkreten Ausführungsbeispiel ein Merkmal in Kombination mit einem anderen Merkmal dargestellt wird, dient dies nur der vereinfachten Darstellung der Erfindung anhand des Ausführungsbeispiels und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird. Es zeigen:
Fig. 1: eine schematische Schnittansicht in axialer Richtung einer Hülse im Ausgangszustand zu Beginn des erfindungsgemäßen Verfahrens,
Fig. 2: eine schematische Schnittansicht in axialer Richtung der Hülse aus Fig. 1 im Bearbeitungszustand zu einem späteren Zeitpunkt des erfindungsgemäßen Verfahrens,
Fig. 3: eine schematische Schnittansicht in axialer Richtung der Hülse aus Fig. 2 im Endzustand zu einem Ende des erfindungsgemäßen Verfahrens,
Fig. 4: eine schematische Schnittansicht in radialer Richtung der Hülse aus Fig. 2,
Fig. 5: eine schematische Schnittansicht in radialer Richtung eines erfindungsgemäßen Haltewerkzeugs mit der Hülse aus Fig. 4 und
Fig. 6: eine schematische Schnittansicht in axialer Richtung des Haltewerkzeugs aus Fig. 5 entlang der Schnittline A - A.

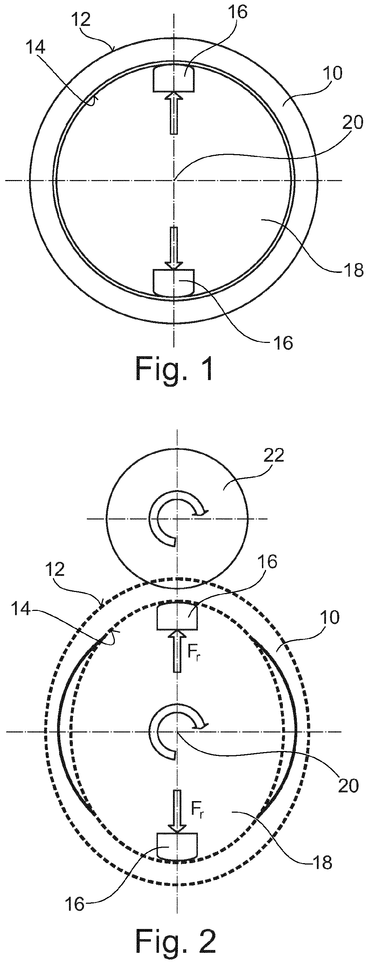

Die in Fig. 1 dargestellte Hülse 10 weist in ihrem spannungsfreien Ausgangszustand einen im Wesentlichen kreisringförmigen Querschnitt und eine zylindrische Erstreckung in axialer Richtung auf, so dass eine Außenseite 12 der Hülse 10 und eine Innenseite 14 der Hülse 10 eine kreiszylindrische Kontur aufweisen. Die Innenseite 14 begrenzt einen Innenraum 18 der Hülse 10. In den Innenraum 18 der Hülse 10 können erste Spannbacken 16 eingesteckt werden. Im dargestellten Ausführungsbeispiel sind zwei erste Spannbacken 16 dargestellt, wobei auch eine, drei vier oder noch mehr erste Spannbacken 16 vorgesehen sein können. Die ersten Spannbacken 16 können von radial innen her gegen die Innenseite 14 der Hülse 10 drücken.

Wie in Fig. 2 dargestellt ist, können die ersten Spannbacken 16 die Hülse 10 in einen Bearbeitungszustand elastisch verformen. Wenn zwei erste Spannbacken 16 in einer durch einem Flächenschwerpunkt 20 der Hülse 10 verlaufenden Radialebene einander gegenüberliegend positioniert sind, kann die Hülse 10 eine elliptische Form annehmen. Bei mehreren ersten Spannbacken 16 und/oder einer in Umfangsrichtung ungleichmäßigen Verteilung der ersten Spannbacken 16 kann die elastisch verformte Hülse im Bearbeitungszustand eine ovale Form annehmen, die eine Symmetrieebene aufweisen kann oder auch nicht. Zudem ist es möglich die erste Spannbacken 16 mit unterschiedlich großen Anpresskräften zu beaufschlagen, so dass sich beispielsweise eine eiförmige Form für die Hülse 10 im Bearbeitungszustand einstellen kann. Im verspannten Bearbeitungszustand kann die Außenseite 12 der Hülse von einem Werkzeug 22, beispielsweise eine Schleifscheibe oder ein Drehmeißel, bearbeitet werden, insbesondere spanabhebend. Durch die spanende Bearbeitung, insbesondere durch Drehen, Fräsen oder Schleifen, ergibt sich eine zylindrische Außenseite 12 der sich noch im verspannten Bearbeitungszustand befindenden Hülse 12.

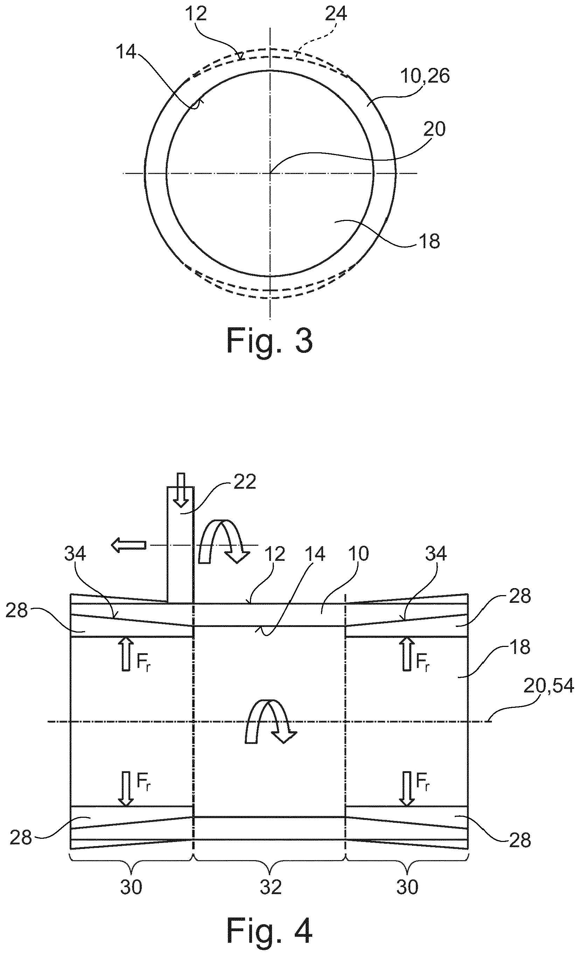

Wenn, wie in Fig. 3 dargestellt ist, die ersten Spannbacken 16 gelöst und aus dem Innenraum 18 aus der Hülse 10 entfernt werden, kann sich die Hülse 10 in einen spannungsfreien Endzustand rückverformen. Durch die im Bearbeitungszustand der Hülse 10 abgetragenen Bereiche 24 ergibt sich im Endzustand der Hülse 10 eine nicht-zylindrische, insbesondere eine zumindest bereichsweise in Umfangsrichtung elliptische und/oder ovale, Außenseite 12, wodurch ein herzustellender nicht-zylindrischer Rotationskörper 26 ausgebildet sein kann, der beispielsweise als Innenring eines Gleitlagers, vorzugsweise zur Lagerung eines Planetenrads auf einer feststehenden Planetenachse eines Planetenträgers eines Planetengetriebes, vorzugsweise für eine Windkraftanlage, verwendet werden kann.

Wie in Fig. 4 dargestellt ist, können mit Hilfe von zweiten Spannbacken 28, die jeweils in Endbereichen 30 der Hülse 10 eingesteckt sein. Die Endbereiche 30 sind an beiden Seiten eines Mittenbereichs 32 vorgesehen, wo die ersten Spannbacken 16 angreifen. Aus Gründen der besseren Übersichtlichkeit sind die bereits in Fig. 2 dargestellten ersten Spannbacken 16 in Fig. 4 nicht erneut dargestellt. Die zweiten Spannbacken 28 weisen im Querschnitt eine an der Innenseite 14 der Hülse 10 im Endbereich 30 angreifende Schräge auf. Die jeweilige zweite Spannbacke 28, die sich nur teilweise in Umfangsrichtung erstreckt, kann eine zumindest bereichsweise konisch geformte Anpressfläche 34 aufweisen. Durch die konische Anpressfläche 34 der zweiten Spannbacken 28 kann die Hülse 10 in den Endbereichen zu ihren Stirnseiten hin konisch aufgeweitet werden, so dass von den Werkzeug 22 zu den Stirnseiten hin von dem Material der Hülse 10 mehr abgetragen werden kann. Vorzugsweise kann das Werkzeug 22 zumindest im letzten Bearbeitungsschritt von einer axialen Stirnseite der Hülse 10 bis zu einer anderen axialen Stirnseite der Hülse 10 hin in einer einzigen spanenden Bearbeitung über den gesamten Umfang der Außenseite 12 der Hülse spanend angreifen, so dass sich insbesondere nur eine einzige spiralförmige Bearbeitungsspur ergibt.

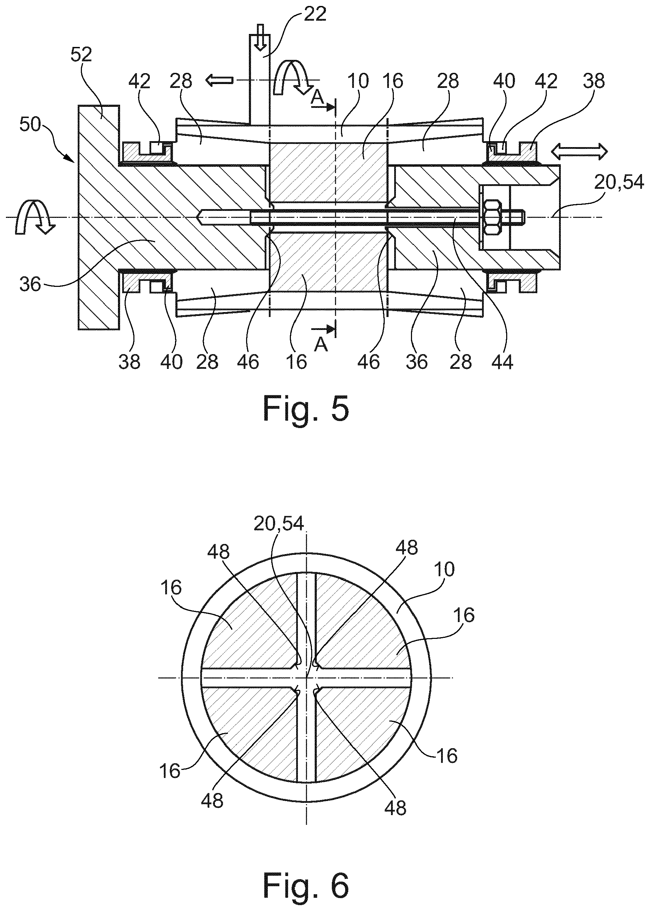

Wie in Fig. 5 dargestellt ist, können die zweiten Spannbacken 28 in dem jeweiligen Endbereich 30 auf einen jeweils zugeordneten Haltekörper 36 aufgesteckt sein und insbesondere von jeweils einer auf den zugeordneten Haltekörper 36 aufgeschraubte Nutmutter 38 verliersicher zurückgehalten sein. Die Nutmutter 38 weist einen Mitnehmer 40, der mit einem auf die Hülse 10 zu weisenden Endanschlag in axialer Richtung gegen die zweite Spannbacke 28 drücken kann und mit einem von der Hülse 10 weg weisenden Rückanschlag an einem den Mitnehmer 40 hintergreifenden Axialanschlag 42 anschlagen kann, der von der zweiten Spannbacken 28 ausgebildet ist und aus der Hülse 10 heraus abstehen kann. Beim Verspannen der Hülse 10 aus den Ausgangszustand in den Bearbeitungszustand kann der Mitnehmer 40 mit seinem Endanschlag gegen die zweite Spannbacke 28 drücken und die zweite Spannbacke 28 in die Hülse axial hineindrücken, wodurch der Endbereich 30 der Hülse aufgeweitet wird. Bei einem Lösen der zweiten Spannbacke 28 kann der Mitnehmer mit seinem Rückanschlag gegen den Axialanschlag 42 der zweiten Spannhülse 28 drücken eine Selbsthemmung zwischen der zweiten Spannhülse 28 und der Innenseite 14 der Hülse aufheben.

Zudem ist die zweite Spannbacke 28 über den zugeordneten Haltekörper 36 mit der ersten Spannbacke 16 bewegungsgekoppelt. Wenn die zweite Spannbacke 28 axial in die Hülse 10 hineingedrückt wird, kann der Haltekörper 36 axial mitgenommen werden. Hierzu kann beispielsweise eine Verschraubung 44 zwischen den beiden Haltekörpern 36 angezogen werden, so dass die beiden Haltekörpern 36 aufeinander zu verlagert werden und die jeweilige aufgeschraubte Nutmutter 38 sowie die zweiten Spannbacken 28 mitnehmen. Der jeweilige Haltekörper 36 weist insbesondere einen Konusansatz 46 auf, der an einer korrespondierenden Konusfläche 48 der ersten Spannbacken 16, wie in Fig. 6 dargestellt ist, angreifen können, um die ersten Spannbacken 16 nach radial außen zu treiben.

Die über die Verschraubung 44 miteinander verbundenen Haltekörper 36, die aufgeschraubten Nutmuttern 42 sowie die aufgenommenen ersten Spannbacken 16 und zweiten Spannbacken 28 bilden ein Haltewerkzeug 50 aus, mit dessen Hilfe die Hülse 10 aufgenommen, verspannt, bearbeitet und im bearbeiteten Endzustand wieder entnommen werden kann. Das Haltewerkzeug 50 kann insbesondere in eine Werkzeugmaschine, beispielsweise eine Drehmaschine, eingespannt werden. Hierzu kann mindestens ein Haltekörper 36 des Haltewerkzeugs 50 einen entsprechend geformten Montagebereich 52 aufweisen, mit dem das Haltewerkzeug 50 in die Werkzeugmaschine, insbesondere von der Werkzeugmaschine rotierbar um eine durch den Flächenschwerpunkt 20 der Hülse 10 verlaufende Rotationsachse 54, eingespannt werden kann.

## Patentansprüche

1. Verfahren zur Herstellung eines nicht-zylindrischen Rotationskörpers (26), insbesondere Gleitlager für ein Planetenrad eines Planetengetriebes, mit den Schritten Bereitstellen einer im Wesentlichen zylindrischen Hülse (10) in einem im Wesentlichen spannungsfreien Ausgangszustand,
Einsetzen von mindestens zwei Spannbacken (16, 28) in einen Innenraum (18) der Hülse (10),
Verspannen der Hülse (10) mit Hilfe der Spannbacken (16, 28) aus dem Ausgangszustand in einen von der Zylinderform abweichenden elastisch verformten Bearbeitungszustand,
Erzeugen einer zylindrischen Außenseite (12) der verspannten Hülse (10), insbesondere durch ein spanendes Bearbeitungsverfahren, während eine Rotation der Hülse (10) relativ zu einem Werkzeug (22), insbesondere um eine durch einen Flächenschwerpunkt (20) einer Querschnittsfläche der Hülse (10) verlaufenden Rotationsachse (54), erfolgt, und
Lösen der Spannbacken (16, 28) zur Rückverformung der Hülse (10) in einen im Wesentlichen spannungsfreien Endzustand zur Bereitstellung des Rotationskörpers (26).

2. Verfahren nach Anspruch 1, bei dem ein axialer Endbereich (30) der Hülse (10) im Bearbeitungszustand zu einer axialen Stirnfläche hin im Wesentlichen konisch aufgeweitet wird.

3. Verfahren nach Anspruch 1 oder 2, bei dem sowohl ein Mittenbereich (32) der Hülse (10) als auch der/ein Endbereich (30) der Hülse (10) im Bearbeitungszustand von den Spannbacken (16, 28) elastisch verformt werden, wobei die Verformung des Mittenbereichs (32) von der Verformung des Endbereich (30) abweicht, wobei insbesondere der Mittenbereich (32) im Wesentlichen oval und der Endbereich (30) zumindest im Wesentlichen konisch verformt wird.

4. Verfahren nach Anspruch 3, bei dem erste Spannbacken (16) zum Verspannen des Mittenbereichs (32) während des Verspannens des Endbereichs (30) mit Hilfe von zweiten Spannbacken (28) nach radial außen getrieben werden.

5. Verfahren nach einem der Ansprüche 1 bis 4, bei dem mindestens eine Spannbacke (16, 28) beim Verspannen der Hülse (10) selbsthemmend mit der Hülse (10) verpresst wird, wobei diese Spannbacke (16, 28) einen axial von der Hülse (10) abstehenden Axialanschlag (42) aufweist und beim Lösen dieser Spannbacke (16, 28) eine Axialkraft zum Überwinden der Selbsthemmung auf den Axialanschlag (42) aufgeprägt wird.

6. Verfahren nach einem der Ansprüche 1 bis 5, bei dem das Erzeugen der zylindrischen Außenseite (12) der Hülse (10) durch ein spanabhebendes Verfahren, insbesondere Drehen, Fräsen oder Schleifen, erfolgt, wobei die nach der spanabhebenden Bearbeitung im Bearbeitungszustand und/oder im Endzustand der Hülse (10) vorliegende Außenseite (12) durch einen einzigen Werkzeugkontakt eines spanabhebenden Werkzeugs (22) mit der Hülse (10) über die gesamte axiale Erstreckung der Hülse (10) erzeugt ist.

7. Verfahren nach einem der Ansprüche 1 bis 6, bei dem die Hülse (10) im Endzustand auf einen, insbesondere zweiteiligen, Kern aufgesteckt, insbesondere aufgepresst, wird, wobei eine Außenkontur des Kerns ganz oder teilweise einer Innenkontur der Hülse (10) entspricht.

8. Rotationskörper (26) herstellbar nach dem Verfahren nach einem der Ansprüche 1 bis 7, mit einer nicht-zylindrischen Außenseite (12) in einem Mittenbereich (32) und konisch verlaufenden Endbereichen (30), wobei die Außenseite (12) nur eine einzige spanabhebende Bearbeitungsspur aufweist.

9. Haltewerkzeug (50) zur Durchführung des Verfahrens nach einem der Ansprüche 1 bis 7, mit
ersten Spannbacken (16) zum elastischen Verformen eines Mittenbereichs (32) der Hülse (10),
zweiten Spannbacken (28) jeweils zum elastischen Verformen von sich an dem Mittenbereich (32) anschließenden Endbereichen (30) der Hülse (10),
zwei an unterschiedlichen Axialseiten der ersten Spannbacken (16) über eine Schräge zum Auseinanderdrücken der ersten Spannbacken (16) in radialer Richtung angreifenden Haltekörpern (36), wobei die Haltekörper (36) in axialer Richtung zueinander verlagerbar sind,
wobei mit dem jeweiligen Haltekörper (36) die jeweils zugeordnete zweite Spannbacke (28) bewegungsgekoppelt ist.

10. Haltewerkzeug (50) nach Anspruch 9, wobei mit dem Haltekörper (36) ein relativ zu dem Haltekörper (36) mit einem Bewegungsanteil in axialer Richtung bewegbarer Endanschlag zum Anpressen an die zugeordnete zweite Spannbacke (28) befestigt ist, wobei insbesondere der Endanschlag durch eine auf den Haltekörper (36) aufgeschraubte Nutmutter (38) ausgebildet ist.

11. Haltewerkzeug (50) nach Anspruch 10, wobei der Endanschlag Teil eines Mitnehmers (40) zum Anschlagen an einen aus der Hülse (10) herausragenden Axialanschlag (42) der zweiten Spannbacke (28) ist.

12. Haltewerkzeug (50) nach einem der Ansprüche 9 bis 11, wobei die beiden Haltekörper (36) relativ zueinander axial verlagerbar miteinander verschraubt sind.

13. Haltewerkzeug (50) nach einem der Ansprüche 9 bis 12, wobei der mindestens eine Haltekörper (36) einen von der Hülse (10) wegweisenden Montagebereich (52) zur Befestigung des Haltekörpers (36) in einer Werkzeugmaschine, insbesondere Drehmaschine und/oder Fräsmaschine und/oder Schleifmaschine, aufweist.

14. Computerprogrammprodukt umfassend Befehle, die bei der Ausführung des Programms durch eine Datenverarbeitungseinrichtung einer Werkzeugmaschine diese veranlassen, das Verfahren nach einem der Ansprüche 1 bis 7 auszuführen.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Rotationskörper (26) nach Anspruch 8 und/oder dem Haltewerkzeug (50) nach einem der Ansprüche 9 bis 13 vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Rotationskörpers (26) und/oder des Haltewerkzeugs (50), insbesondere durch 3D-Druck, durchzuführen,
und/oder
bei einer Verarbeitung durch eine Datenverarbeitungseinrichtung zur Durchführung einer technischen Simulation eine Simulation der Funktionsweise des Rotationskörpers (26) und/oder des Haltewerkzeugs (50) durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen.
